Europäisches Patentamt

European Patent Office

Office européen des brevets

(11) Publication number: **0 086 797**
**B1**

(12) **EUROPEAN PATENT SPECIFICATION**

(45) Date of publication of patent specification: **22.04.87**

(51) Int. Cl.⁴: **G 01 N 21/01,** G 01 N 21/27,
G 01 J 3/46

(21) Application number: **82902517.0**

(22) Date of filing: **26.08.82**

(86) International application number:
**PCT/AU82/00141**

(87) International publication number:
**WO 83/00926 17.03.83 Gazette 83/07**

(54) **REFLECTANCE METER.**

(30) Priority: **28.08.81 AU 477/81**

(43) Date of publication of application:
**31.08.83 Bulletin 83/35**

(45) Publication of the grant of the patent:
**22.04.87 Bulletin 87/17**

(84) Designated Contracting States:
**DE GB SE**

(56) References cited:
**DE-A-3 026 439**
**US-A-3 604 815**
**US-A-3 907 503**
**US-A-4 268 173**

(73) Proprietor: **LIGG PTY. LIMITED**
**21 Mooramba Road**
**Dee Why, N.S.W. 2099 (AU)**

(72) Inventor: **CLARK, Stanley**
**21 Mooramba Road**
**Dee Why, N.S.W. 2099 (AU)**

(74) Representative: **Pratt, David Martin et al**
**Brookes & Martin High Holborn House 52/54**
**High Holborn**
**London. WC1V 6SE (GB)**

Courier Press, Leamington Spa, England.

**Description**

The present invention relates to a reflectance meter. In particular, the invention is directed to a reflectance meter for use in a blood glucose tester for measuring the colour change of test strips treated with the blood to be tested.

A significant proportion of the population suffer from diabetes. Most diabetics receive a regular injection of insulin or glucose, the frequency and dosage of the injections being dependent upon the particular needs of the patient. These requirements are determined by monitoring the patient's blood glucose level for an initial period of time and then determining future requirements by extrapolation. However, since the blood glucose level can vary widely in response to physical exercise for example, the extrapolated estimate may not be accurate. It is thus highly desirable, if not necessary, to be able to obtain a blood glucose reading when and where required.

There is a known method of determining blood glucose level by testing urine of a patient. The known method involves treating a "glucose stick" with urine and determining the blood glucose level from the change in colour of the "glucose stick". However, such a method is not only awkward but also does not provide an accurate reading of the glucose level.

There are also known reflectometers for determining the glucose content of a blood sample. U.S. Patents Nos 4268173 and 3604815 describe two such reflectometers. A blood sample is taken and transferred to a test stick containing reagents including an enzyme which, indirectly, reacts with the glucose of the blood to change the colour of a dye. The greater the glucose content, the deeper becomes the colour of the dye. After a fixed period, the blood is washed or wiped off the test stick, and the stick is inserted into the reflectometer to provide a reading dependent on the "colour" (i.e. the degree of darkness) of the dye. The reflectometers described in US Patents Nos 4267173 and 3604815 do not compensate for the characteristics of the particular test strip used. The reflectance meters must be adjusted manually for each type of strip.

In the reflectometer of US Patent No 3907503, each individual test strip is encoded and the code is read when the test strip is inserted in the reflectometer. However, coding of each strip is not necessary and such individual coding makes this device and the test strips too expensive for day-to-day use by diabetics. It is not necessary to adjust the meter for each strip, but only for each type or make of strip. Unlike the system in US Patent No 3907503, the present invention uses commonly available test strips but encodes the strip gate in which the test strips are inserted. Each strip gate is designed for a particular type or make of test strip, and the strip gates are interchangeable in the reflectometer. It is the code on the strip gate, rather than the strip itself, which is read by the reflectometer. This results in significant costs savings since the reflectometer can be used with commonly available strips, yet the device can compensate for the characteristics of the particular type of strip being used.

The aim of the invention is to provide an improved reflectance meter which is accurate and reliable, yet portable, which can be manufactured inexpensively, and which is easy to operate and practically foolproof.

The present invention provides a reflectance meter for measuring blood glucose level of a blood sample on a treated strip, the reflectance meter comprising optical testing means having strip receiving means, a light source, and at least one light sensitive device, the light sensitive device being positioned to receive light from the light source after reflection from a strip positioned in the strip receiving means; electronic circuit means connected to the light sensitive device and providing an output proportional to the output of the light sensitive device; code reading means connected to the electronic circuit means; and display means connected to the output of the electronic circuit means for providing a display indicative of the measured blood glucose level; characterized in that the strip receiving means comprises a removable strip gate for holding a corresponding strip type in use, the strip gate having a code thereon indicative of the strip type used, in that the code reading means is provided for reading the code when the strip gate is inserted into the meter, and in that the strip receiving means is adapted to receive coded strip gate interchangeably.

Advantageously, the electronic circuit means comprises a measurement circuit having a bridge circuit of which said light sensitive device forms a part.

Preferably, the electronic circuit means also comprises voltage stabilizer means for stabilizing the voltage supplied to said measurement means, and timing means for providing timing periods for testing said strip.

Preferably, said display means comprises a digital numerical display, a moving coil meter or a LED display. For blind operators, a mechanical display such as pop-up pins, or a thermal display such as an incandescent lamp matrix, can be provided.

Preferably, said strip receiving means comprises a hinged lid adapted to hold said strip in position by means of a spring device on said lid. The strip is held in position in the strip receiving means so that the activated area covers an aperture or gate through which the light from the optical source is received and reflected back to the light sensitive device.

Multicoloured strips are also available commercially. Such strips provide more criteria for judging the colour of the treated strip. With a modification, the present invention can also use multicoloured strips.

In this embodiment, the gate is divided into more than one aperture, each aperture corresponding to a particularly coloured portion of the strip.

As strips from different manufacturers have different characteristics, and since even strips from the same batch can vary, it is desirable to take into account changing characteristics of different strips. To compensate, the strip receiving means are interchangeable. Each strip receiving means is mechanically coded so that when it is inserted, the electronic circuit means will interpret the reflected light reading according to an algorithm corresponding to the code of the particular strip receiving means used. Accordingly, strips of a particular characteristic will be used with a correspondingly coded strip receiving means so that the electronic circuit means will compensate for the particular characteristic.

The device can be used in the home and also adapted for large scale medical or industrial use. Advantageously, the electrical circuit of the reflectance meter is simplified so that the device can be repaired by an ordinary technician.

The invention is designed to perform the practical functions of glucose testing required by diabetics with little technical or medical knowledge. Although the applicability of the invention is not limited to diabetics, the device is designed particularly for use by diabetic patients, especially young children, for obtaining a quantitative measurement of blood glucose levels in their blood stream. This enables the diabetic to control and balance his condition, and thereby lead a near normal lifestyle.

In testing blood glucose levels, the operator (usually the patient himself) takes a small drop of blood from the patient, e.g. from the tip of a finger. This blood sample is then placed on the activated pad of a commercially available reagent strip. The activated pad changes colour in direct relation to the amount of glucose present in the blood sample. A dark colour indicates a high glucose level while a light colour indicates a low glucose level.

The blood is left on the strip of a predetermined period of time, typically one minute. After this period of time, excess blood is wiped or washed from the strip. The resultant colour is measured by the reflectance meter according to the reflectance method, i.e. the treated reagent strip is illuminated, and the light reflected therefrom is monitored by a light sensitive device.

There are several systems of measurement units by which the blood glucose level can be quantitatively expressed. The display means can be calibrated for the particular system used. In Australia, the measurement unit used is milli-mole of glucose per litre of blood (mmol/l). The normal range for a diabetic is generally taken as 5 to 9 mmol/l with an upper limit for children set at approximately 10 mmol/l.

Brief Description of the Drawings

Notwithstanding any other forms that may fall within its scope, a preferred embodiment of the present invention will now be described with reference to the drawings in which:

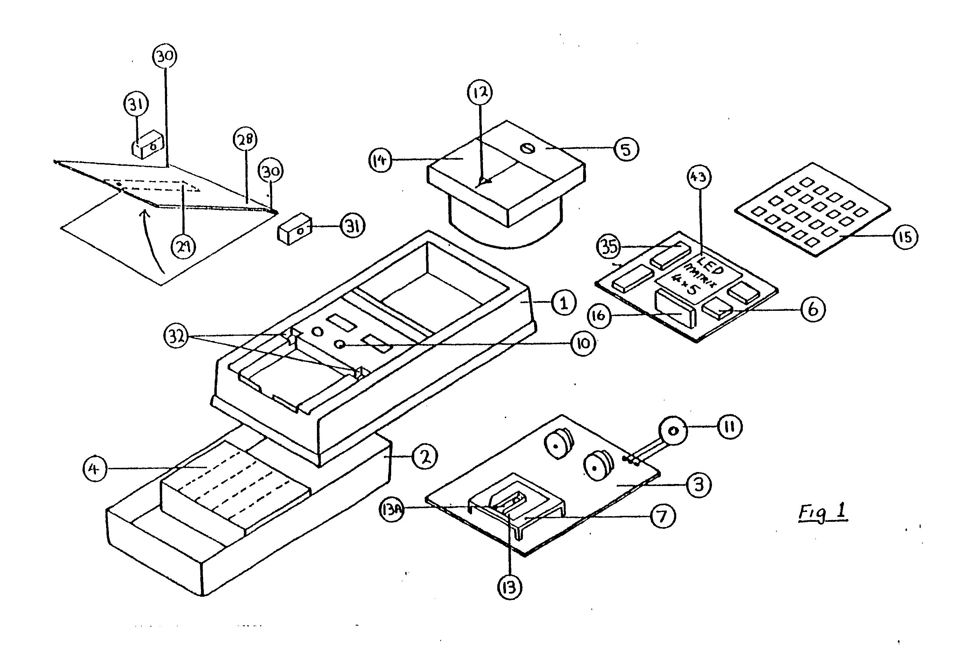

Fig. 1 is an exploded schematic view of the preferred embodiment of the present invention.

Fig. 2A is a schematic plan view of the circuit board of the embodiment of Fig. 1.

Figs. 2B to 2F are schematic views of the optical testing means of the embodiment of Fig. 1.

Fig. 3 is a circuit diagram of the electronic means of Fig. 1.

Figs. 4A to 4D are schematic views of strip receiving means according to another embodiment of the present invention.

Figs. 5A to 5E are schematic views of strip receiving means according to a further embodiment of the present invention.

Best Mode of Carrying Out the Invention

The apparatus of the preferred embodiment is housed in a plastic case constructed in two parts, a top part 1 and a bottom part 2. A printed circuit board 3 containing the electronic circuit means, and display means such as meter 5, are fixed to the inside of the top part 1. The bottom part 2 houses a battery pack 4 which can be an alkaline battery or rechargeable nickel cadmium battery, for example.

The battery pack 4 is connected to the printed circuit board 3 to power the electronic circuit means 55 which comprises (a) a control system, (b) a warning (timing) system and (c) a measuring system. The electronic circuit means can also be powered from a low voltage mains operated unit which can also act as a charger unit when rechargeable batteries are used.

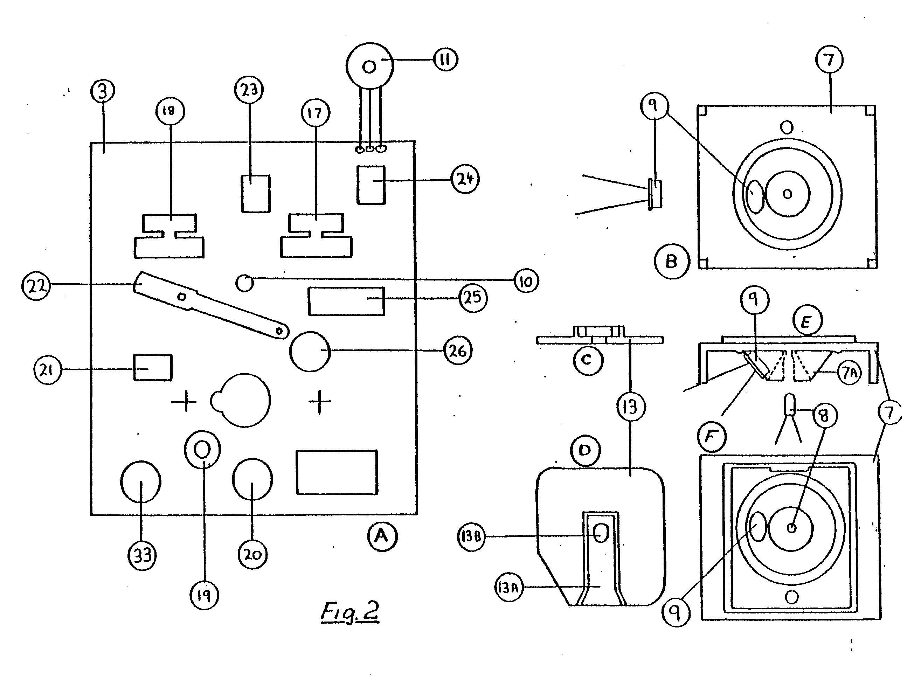

The optical testing means (Figs. 2B—2F) comprises a plastic light chamber 7 mounted adjacent the printed circuit board 3, but preferably not rigidly connected thereto. The light chamber 7 houses a light source such as a precision LED 8. The light chamber 7 also contains a light sensitive device such as a light dependent resistor cell 9.

A removable strip gate 13 is fitted onto the light chamber 7, the LDR 9 being arranged to receive light from the precision lamp 8 after reflection from a reagent strip inserted in the strip gate 13. Since the strip gate 13 is removable, it may be replaced with different strip gates catering for different size reagent strips.

In measuring blood glucose level, a treated test strip is placed into gate slot 13A of the gate 13. The dimensions of the gate slot are such that the reagent active pad of the test strip is positioned centrally over aperture 13B. Light from the precision light source 8 is projected through the aperture 13B onto the activated pad of the test strip, and the reflected light (which is dependent upon the colour of the test strip) passes back through the aperture and is received in chamber 7A. The chamber 7A contains the light dependent resistor (LDR) cell 9. The resistance of the LDR 9 varies in proportion to the intensity of light received. The LDR 9 is used as the variable arm of a modified Wheatstone bridge circuit 50 in the measurement system of the electronic circuit means 55. The resultant imbalance in the arms of the bridge is sensed and measured by meter 5, the scale of which can be calibrated to read the appropriate units of measurement of the strip under test. The upper and lower meter readings are standardized or calibrated by use of a LOW reference strip (dark colour) and a HIGH reference strip (light colour). In calibrating the meter 5, a reference strip is inserted in the gate slot 13A and the meter reading is adjusted to the appropriate minimum or maximum setting by means of respective variable potentiometers SET 1 (17) and SET 2 (18). In the described embodiment, the zero meter reading is adjusted by SET 1 while full scale deflection is adjusted by SET 2.

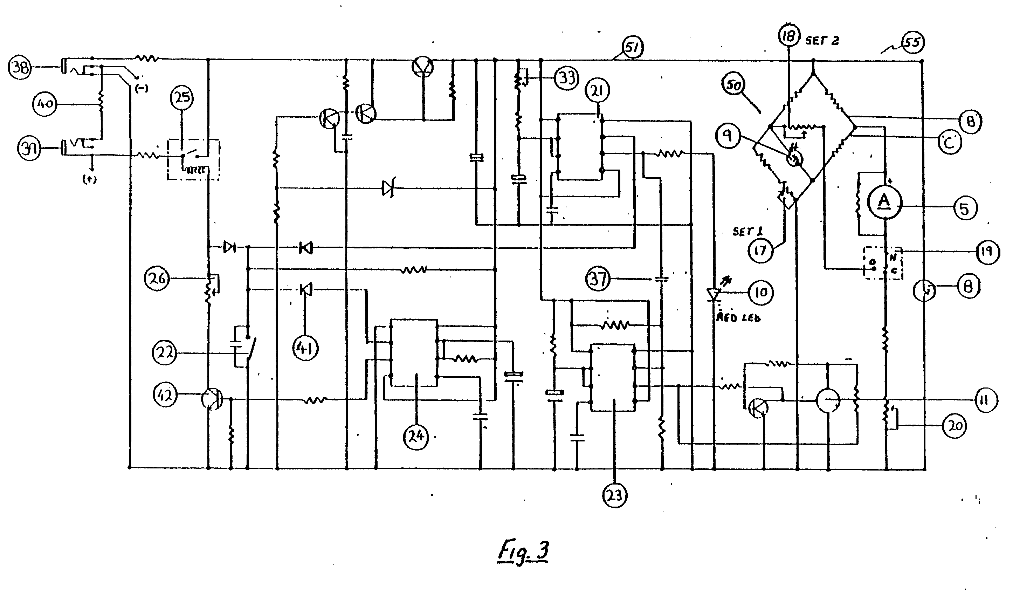

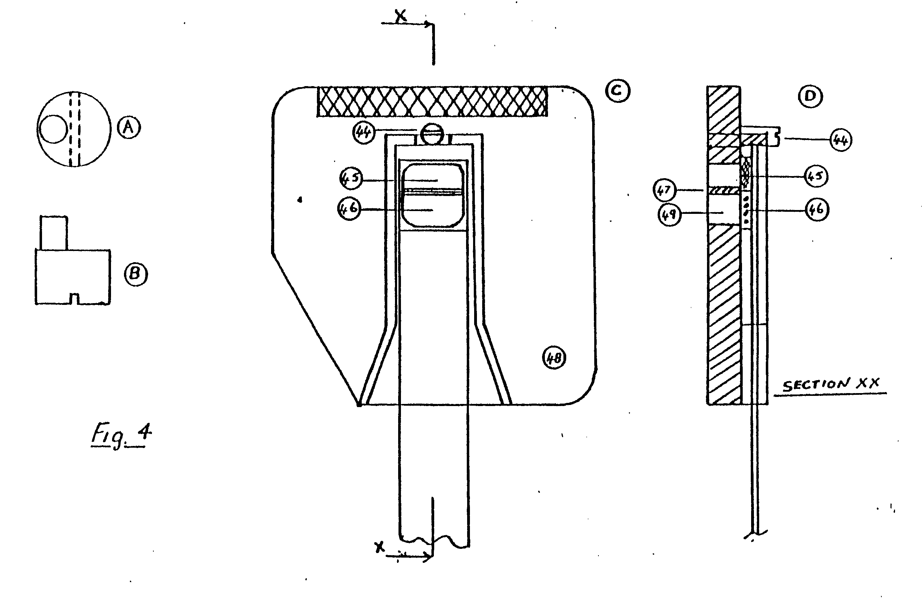

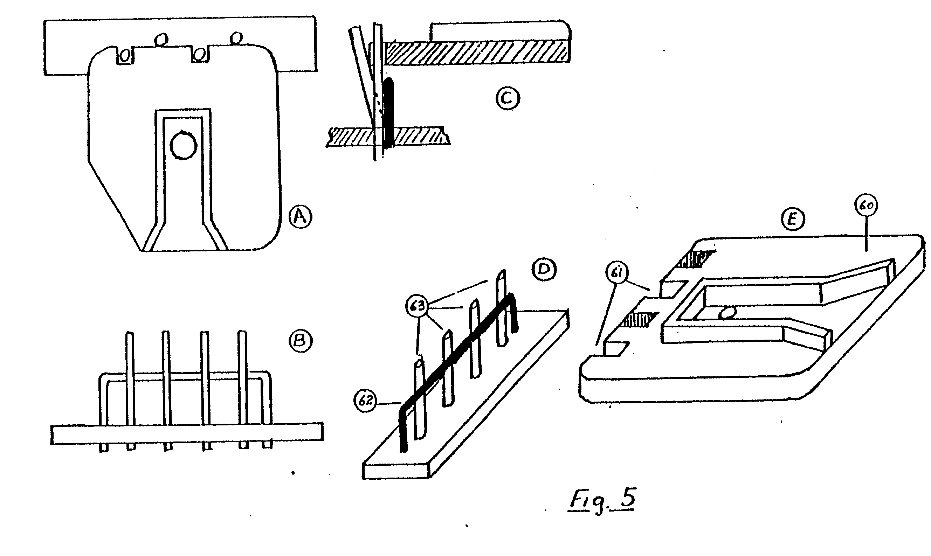

It will be seen from the circuit diagram of Fig. 3 that potentiometer 17 (SET 1) is wired across the LDR sensing cell 9 and is not in the "C" arm of the bridge circuit as in a standard bridge circuit. In the bridge circuit 50 of the present embodiment, bridge arms B and C also act as part of a potential divider chain when the meter 5 is in a stabilizer voltage measurement mode which is selected by the N/C contacts of switch 19. When the switch 19 is pressed, the N/O contacts close, thereby placing meter 5 in a reflectance measurement mode.

By setting SET 1 and SET 2 (which typically takes only about 10 seconds), the system compensates for resistance changes of LDR 9 due to temperature variations, for example. The calibration procedure also compensates for long term ageing of the precision light source 8, and any foreign body that may be lodged in the aperture and affecting the intensity of the transmitted and/or reflected light beams.

The bridge circuit 50, light source 8, and accurate timer functions of the electronic circuit means are all fed by a stabilized voltage on line 51. The stabilized voltage is monitored by the meter 5 when switch 19 is in the N/C position, the meter deflection being adjusted by a potentiometer 20.

The voltage stabilizer can be of the standard type series regulator designed to maintain small differential voltages. This ensures maximum battery life when dry batteries are being used.

A warning system comprises an LED indicator 10 and a piezo-electric buzzer 11. Also, by placing meter 5 in the voltage measurement mode, the voltage supply to electronic circuit means can be monitored, and meter 5 indicates any significant variation in the stabilized voltage.

Timing means providing a first short timing period of approximately one minute comprises a standard type 555 timer integrated circuit 21. A switch 22 initiates the timing cycle, and after the timing period is completed, LED 10 turns off, thereby generating a negative pulse which is fed via capacitance 37 to the start pin of a second 555 timer 23 with a time constant of approximately 3 seconds. When the negative pulse arrives at the start pin of IC 23, the output of IC 23 goes high and activates the piezo-electric buzzer 11 which emits an audible tone thereby signalling the end of the timing cycle.

Pressing the switch 22 also activates a further 555 IC timer 24 which is preset to approximately 5 minutes. Timer 24 acts as an automatic cutout system, the 5 minute period being of sufficient time in which to carry out a single test. Preferably, the automatic turnoff function is only operative when the device is operating from internal batteries so that battery power is conserved. For continuous operation, the output of the mains adaptor is arranged to by-pass the automatic cutoff circuit via jack socket 38.

A separate socket 39 is also provided so that the mains adaptor can be used as a battery charger when rechargeable batteries are being used. The final charge current can be adjusted by resistance 40.

The operation of the automatic cutoff function is as follows. Operation of switch 22 connects the reed relay coil 25 to earth or the negative rail of the supply. Energisation of the coil 25 causes the reed contacts to close, thereby supplying power to the voltage stabilizer circuit. The stabilized voltage supply, which is preferably 4 volts, is then applied to the electronic components of the electronic circuit means.

When the period (5 minutes) preset on timer 24 has elapsed, the timer 24 turns off, causing transistor 42 to turn off and relay 25 to open. The device is then automatically turned off.

The closing of switch 22 also gates, via diode 41, the timer IC 24 thereby causing it to commence timing. The output of the timer is connected to the base of transistor 42 turning it on. The transistor 42 then maintains a current through the relay coil 25 and holds the relay in the closed position. A potentiometer 26 is provided in the relay coil circuit, the coil current being variable by adjustment of the variable resistor 26. The coil current can be adjusted to allow the relay to open (thereby turning the device off) when the battery voltage falls below a predetermined value, typically 5.3 to 5.5 volts.

When the machine is connected to mains power via an adaptor (not shown) the automatic cutoff circuit is disconnected. The regulation of the dc supply to the electronics is such that the ac input voltage can fall by approximately one-third before the stabilizer voltage falls below its critical voltage. This is unlikely to occur under normal conditions.

The preferred embodiment also comprises improved means for holding the test strip in position during testing. A metal leaf spring 29 is provided in a gate cover 28, the spring 29 being adjusted to place a downward pressure on the test strip. This ensures that the distance from the light source 8 to the test strip surface is held constant and equal to the distance of the reference strips used in the original calibration.

The gate cover 28 is preferably hinged for easy cleaning of the aperture 13B. The hinge system comprises two tabs 30 on the gate cover 28 which engage, and are rotatable in, bearing blocks 31. It has been found that in portable equipment of plastic construction, a hinged lid or door is very vulnerable to damage if the unit is dropped. In the preferred embodiment, the hinge system is such that the bearing blocks 31 are held in slots 32.

Hence, if the lid is damaged it can be readily changed without the need to dismantle the whole unit. Further, the lid change operation can be performed by the owner without any disruption to the electronic circuit or calibration settings.

The preferred embodiment also comprises display means for displaying the measured blood glucose level. The display means is fed with output current from the electronic circuit means and can comprise an output meter, digital display, or bargraph using LEDs. Advantageously, the output meter is a specially designed moving coil meter 5. The bargraph display can comprise a series of LEDs 43, the output reading being indicated by the number of LEDs which are enabled. By using LEDs of different colours arranged in a predetermined pattern, the output is displayed as a coloured band of light which has the advantage of providing a quasi-digital display and yet giving analog information using colours which are easily understood by a child. For example, the LEDs corresponding to high levels of blood glucose can be red LEDs while those corresponding to low levels can be green LEDs. Thus, the operator can determine the nature (safe or dangerous) of the blood glucose level at a glance.

An analog readout i.e. moving coil meter or bargraph, has been found to be the best form of display as the analog system will reveal very delicate trends. For remote country areas in Australia and especially underdeveloped countries, the meter read out is preferable as it can be repaired easily without the need for expensive or complex service equipment or specialized electronic knowledge. However, as the modern preference is for digital readouts, the bargraph or digital display can be used.

At a reading of 15 mmol/l, a diabetic patient should test for Ketones in the urine. If a bargraph display is used, the readings above 15 mmol/l can be made to flash to thereby remind the patient to test for Ketones. This feature can be implemented by supplying the anodes of the LEDs reading over 15 mmol/l with a pulsating dc voltage. Oscillator IC 36 is provided for this purpose.

The analog moving coil meter can be replaced with the bargraph display without any change to the main printed circuit board 3. A printed plastic screen 15 containing the numerical output readings corresponding to the particular strip used, is placed in position over the LED matrix 43. An integrated circuit 6 is used to interface the output of measurement means on PC board 3 to the bargraph unit. The integrated circuit 6 matches the balanced output of the bridge with the unbalanced input of the bargraph, which comprises comparator integrated circuits 35. The output from the comparators 35 is connected to a LED indicator matrix 43, which is typically a 4 × 5 matrix.

The LEDs will light up in proportionate number to the colour of the strip being tested. The comparators 35 are operated in a linear mode, but the colour change of the test strip is non-linear. In order to compensate for this aspect, the input to output characteristic of integrated circuit 6 is made non-linear and matched to the subject test strip by means of a feedback resistor network 16. The resistor network 16 is a plug in unit and can be changed to suit the colour proportionality law of different strips.

In calibrating the bargraph display, SET 1 and SET 2 are adjusted by the respective potentiometer to just light up the first and last LED.

For blind operators, a mechanical or thermal display can be used. The mechanical display is analogous to the bargraph display except that the LEDs are replaced by pins which "pop up" on energization. The blind operator can then "read" the pin display by touch. In an alternative thermal display, the LEDs are replaced by incandescent lamps. The operator can then "read" the display by sensing the heat radiated by the enabled lamps.

High accuracy in blood glucose readings can be achieved if there are more criteria for judging the colour of the treated strip. For example, the effect of the blood stain on a light strip and a dark strip can be compared to pin point the glucose level more accurately.

Another embodiment of the present invention, illustrated in Fig. 4, utilizes the effect of a blood stain on different coloured strips. In this embodiment, a modified strip gate 48 is provided in which the aperture 49 is divided into two. The gate is designed to be used with commercially available strips of two colours so that when the strip is inserted into the gate, two treated portions of different colours 45, 46 will be positioned respectively across two apertures. This is achieved by ensuring that the divider line 47 (which divides the total aperture 49 into the two apertures) covers the boundary line between the two coloured portions of the strip. An eccentric adjustable strip stop 44 is provided to ensure that the treated section is properly positioned with respect to the light source, and that the boundary of the two coloured sections coincides with the dividing line 47.

Strips sold by different manufacturers, and even from the same manufacturer, come in different varieties, each having peculiar characteristics. If different strips are used, the electronic means must compensate for the different characteristics. In a further embodiment of the present invention, illustrated in Fig. 5, coded interchangeable strip gates 60 are provided, the gate code indicating the particular strip being used. The gate is physically coded by notches 61 at predetermined distances across the front of the gate as shown in Fig. 5E. A code reader is shown in Figs. 5B—5D and comprises a horizontal contact bar 62 and a plurality of vertical contact rods 63. When the gate 60 is inserted, the rods 63 will be bent out of contact with the bar 62, except for those rods corresponding to notches 61 in the gate. Thus, by sensing which rods are still in electrical contact with the bar 62, the code is decoded and the electronic circuit means automatically compensates for the particular strip used.

It will be apparent that the reference meter described above could be modified in a number of ways. For example, the reflectance meters can be used for strips treated with other liquids, e.g. urine.

**Claims**

1. A reflectance meter for measuring blood glucose level of a blood sample on a treated strip, the reflectance meter comprising optical testing means (7) having strip receiving means (13, 48 or 60), a light source (8), and at least one light sensitive device (9), the light sensitive device (9) being positioned to receive light from the light source (8) after reflection from a strip positioned in the strip receiving means (13, 48 or 60); electronic circuit means (55) connected to the light sensitive device (9) and providing an output proportional to the output of the light sensitive device (9); code reading means (62, 63) connected to the electronic circuit means (55); and display means (5, 43) connected to the output of the electronic circuit means (55) for providing a display indicative of the measured blood glucose level; characterized in that the strip receiving means comprises a removable strip gate (13, 48 or 60) for holding a corresponding strip type in use, the strip gate (13, 48 or 60) having a code (61) thereon indicative of the strip type used, in that the code reading means (62, 63) is provided for reading the code when the strip gate (13, 48 or 60) is inserted into the meter, and in that the strip receiving means (13, 48 or 60) is adapted to receive coded strip gates (13, 48 or 60) interchangeably.

2. A reflectance meter as claimed in claim 1 for use with a two colour strip, wherein there are two apertures (49) in the strip gate (48) separated by a dividing member (47), the apertures (49) being positioned to communicate with respective coloured portions (45, 46) of a two colour strip inserted into said gate.

3. A reflectance meter as claimed in claim 2, wherein the strip gate (48) is provided with an adjustable stop (44) for an inserted strip.

4. A reflectance meter as claimed in claim 1, wherein the strip gate (60) is encoded by spaced indentations (61) along an edge thereof, and wherein the code reading means comprises a plurality of resilient electrical conductors (63), each of which makes or breaks contact with another conductor (62) depending on the presence or absence of an indentation (61) in the edge of the strip gate (60) at a corresponding location.

5. A reflectance meter as claimed in claim 1, wherein the electronic circuit means (55) includes timing means (21, 23, 24) for issuing timing signals in use.

6. A reflectance meter as claimed in claim 5, wherein the electronic circuit means (55) includes a Wheatstone bridge (50), and the light sensitive device is a light dependent resistor (9), the light dependent resistor (9) forming part of the Wheatstone bridge (50).

7. A reflectance meter as claimed in claim 6, wherein the electronic circuit means further includes a voltage stabilizing circuit for regulating the voltage thereto.

8. A reflectance meter as claimed in any one of claims 1 to 7, wherein the display means comprises a mechanically actuated display or thermal display.

**Patentansprüche**

1. Reflexions-Messgerät zur Bestimmung des Blut-Glukosegehaltes in einer Blutprobe auf einem vorbehandelten Streifen, wobei das Reflexions-Messgerät umfasst: optische Messvorrichtungen (7) mit Aufnahme-Einrichtungen (13, 48 oder 60) für den Streifen, eine Lichtquelle (8) und ein lichtempfindliches Gerät (9), welches so angeordnet ist, dass es Licht von der Lichtquelle (8) empfängt, nachdem dieses vom Streifen in der Aufnahme-Einrichtung (13, 48 oder 60) reflektiert wurde; elektronische Schaltungen (55), verbunden mit dem lichtempfindlichen Gerät (9), welche Schaltungen ein Ausgangssignal im proportionalen Verhältnis zum Ausgangssignal des lichtempfindlichen Geräts erzeugen; Code-lese-Vorrichtungen (62, 63), verbunden mit den elektronischen Schaltungen (55); und Anzeigevorrichtungen (5, 43), verbunden mit dem Ausgang der elektronischen Schaltungen (55) zur Anzeige eines hinsichtlich des gemessenen Blut-Glukosegehaltes indikativen Wertes, dadurch gekennzeichnet,

dass die Aufnahme-Einrichtung für den Streifen ein entfernbares Streifenfenster (13, 48 oder 60) zur Aufnahme eines der gebräuchlichen Streifen umfasst, wobei das Streifenfenster (13, 48 oder 60) einen Code (61) daran angebracht hat, welcher dem verwendeten Streifentyp entspricht,

dass die Code-lese-Vorrichtung (62, 63) den genannten Code liest, sobald das Streifenfenster (13, 48 oder 60) in die Aufnahme-Vorrichtung des Reflexions-Messgerätes eingefügt wird und

dass die Streifen-Aufnahmeeinrichtung (13, 48 oder 60) so ausgebildet ist, dass sie verschieden kodiert Streifenfenster (13, 48 oder 60) austauschbar aufnehmen kann.

2. Reflexions-Messgerät gemäss Patentanspruch 1 zur Verwendung mit einem zweifarbigen Streifen, bei welchem Gerät im Streifenfenster (48) zwei Durchgangsöffnungen (49) und ein Zwischenteil (47) vorgesehen sind, wobei die Oeffnungen (49) so angebracht sind, dass sie mit den entsprechenden, gefärbten Teilen (45, 46) des zweifarbigen Streifens im genannten Fenster übereinstimmen.

3. Reflexions-Messgerät gemäss Patentanspruch 2, bei dem im Streifenfenster (48) ein anpassbarer Anschlag (44) für den eingeführten Streifen vorgesehen ist.

4. Reflexions-Messgerät gemäss Patentanspruch 1, bei dem der Code des Streifenfensters (60) in Form von Einkerbungen (61) entlang einer Kante des Fensters vorgesehen ist und bei dem die Code-lese-Vorrichtung eine Mehrzahl von biegsamen elektrischen Leitern (63) umfasst, welche Leiter die Verbindung zu einem andern entsprechenden Leiter herstellen bzw. unterbrechen, je nachdem, ob an der entsprechenden Stelle eine Einkerbung in der Kante des Streifenfensters (60) vorgesehen ist oder nicht.

5. Reflexions-Messgerät gemäss Patentanspruch 1, bei dem die elektronische Schaltung (55) Zeitmessvorrichtungen (21, 23, 24) umfasst zur Erzeugung von Zeitsignalen während des Gebrauchs des Gerätes.

6. Reflexions-Messgerät gemäss Patentanspruch 5, bei dem die elektronische Schaltung eine Wheatstone-Brücke (50) umfasst, bei der das lichtempfindliche Gerät ein lichtabhängiger Widerstand (9) ist, wobei der lichtabhängige Widerstand (9) Teil der Wheatstone-Brücke (50) ist.

7. Reflexions-Messgerät gemäss Patentanspruch 6, bei dem die elektronischen Schaltungen weiter einen die Spannung stabilisierenden Stromkreis zur Regulierung der aufgegebenen Spannung umfassen.

8. Reflexions-Messgerät gemäss einem der Patentansprüche 1 bis 7, bei dem die Anzeigevorrichtung eine mechanische betätigte Anzeige oder eine Thermo-Anzeige umfasst.

**Revendications**

1. Appareil de mesure de reflectance destiné à mesurer le niveau de glucose sanguin d'un échantillon de sang sur une bande traitée, ce dispositif comprenant des moyens de contrôle optique (7) comportant des moyens de réception de la bande (13, 48 ou 60), une source lumineuse (8) et au moins un organe sensible à la lumière (9), cet organe étant placé pour recevoir de la lumière de la source lumineuse (8) après reflection sur une bande placée dans lesdits moyens de réception de la bande (13, 48 ou 60); un circuit électronique (55) connecté à l'organe sensible à la lumière (9) et délivrant un signal de sortie proportionnel au signal de sortie dudit organe (9); des moyens de lecture de code (62, 63) connectés au circuit électronique (55); et des moyens d'affichage (5, 43) connectés à la sortie du circuit électronique (55) pour fournir un affichage indiquant le niveau de glucose sanguin mesuré, caractérisé en ce que les moyens de réception de bande comportent une porte amovible (13, 48 ou 60) d'introduction de la bande apte à maintenir une bande du type utilisé, un code 61 indiquant le type de bande utilisé étant porté sur ladite porte (13, 48 ou 60); en ce que les moyens de lecture de code (62, 63) sont prévus pour lire ce code quand la porte (13, 48 ou 60) est mise en place dans l'appareil; et en ce que les moyens de réception de bande (13, 48 ou 60) sont adaptés à recevoir indifféremment des portes interchangeables d'introduction de bande (13, 48 ou 60).

2. Appareil selon la revendication 1, destiné à être utilisé avec une bande bicolore, dans lequel deux ouvertures (49) sont prévues dans la porte (48), ces ouvertures étant séparées par une pièce de séparation (47) et placées pour correspondre avec les parties colorées respectives (45, 46) d'une bande bicolore introduite dans ladite porte.

3. Appareil selon la revendication 2, dans lequel la porte (48) est pourvue d'une butée réglable (44) pour arrêter une bande qui y est introduite.

4. Appareil selon la revendication 1, dans lequel la porte (60) est codée à l'aide d'encoches (61) écartées, portées sur l'un des bords, et dans lequel les moyens de lecture du code comprennent une serie de conducteurs électriques élastiques (63), dont chacun ferme ou ouvre un contact avec un autre conducteur (62) selon la présence ou l'absence d'une indentation (61) à l'endroit correspondant sur le bord de la porte (60).

5. Appareil selon la revendication 1, dans lequel le circuit électronique comprend des minuteries (21, 23, 24) émettant des signaux de minutage pendant le fonctionnement.

6. Appareil selon la revendication 5, dans lequel le circuit électronique comprend un pont de Wheatstone (50), et l'organe sensible à la lumière est une résistance photo-sensible (9), qui fait partie du pont de Wheatstone (50).

7. Appareil selon la revendication 6, dans lequel le circuit électronique comprend en outre un circuit de stabilisation de tension pour y régler la tension.

8. Appareil selon l'une des revendications 1 à 7, dans lequel les moyens d'affichage comprennent un dispositif d'affichage actionné mécaniquement ou un dispositif d'affichage thermique.

0 086 797

Fig 1

1

Fig.2

_Fig. 3_

0 086 797

Fig. 4

Fig. 5